# EUROPÄISCHE PATENTSCHRIFT

(11) **EP 1 456 110 B1**
(45) Veröffentlichungstag und Bekanntmachung des Hinweises auf die Patenterteilung: **27.07.2005**
(21) Anmeldenummer: 02805735.4
(22) Anmeldetag: 18.12.2002
(51) Int. Cl.: B66C 1/34, F16G 17/00, F16B 45/00

(54) **HAKEN**
HOOK
CROCHET

(30) Priorität: 21.12.2001 DE 10164595
(43) Veröffentlichungstag der Anmeldung: 15.09.2004
(73) Patentinhaber: RUD-Kettenfabrik Rieger & Dietz GmbH U. Co., 73432 Aalen-Unterkochen (DE)
(72) Erfinder: SMETZ, Reinhard, 86720 Baldingen (DE)
(74) Vertreter: Grünecker, Kinkeldey, Stockmair & Schwanhäusser
(86) Internationale Anmeldenummer: PCT/DE2002/004691
(87) Internationale Veröffentlichungsnummer: WO 2003/055784

(56) Entgegenhaltungen:
- DE-A- 3 045 209
- GB-A- 522 185
- US-A- 4 134 256

## Beschreibung

### Technisches Gebiet

Die Erfindung betrifft einen Haken mit einem Gabelkopf, dessen Gabelzinken einen Einführspalt begrenzen, der durch einen zur Lastübertragung dienenden Querbolzen überbrückt wird.

Haken der vorstehenden Art werden als Anschlagmittel verwendet, die regelmäßig Bestandteile von baukastenartig aufgebauten Anschlagsystemen mit verwechstungsfreien Komponenten bilden.

### Stand der Technik

Aus der DE-U-8 429 724 ist ein gattungsgemäßer Haken bekannt, dessen Gabelkopf zwei parallel zueinander angeordnete, gerade Gabelzinken aufweist. Die einander zugewandten Seiten der Gabelzinken begrenzen einen Einführspalt oder Einführschlitz, dessen Weite hinreichend groß ist, um das Endglied eines hinsichtlich seiner Festigkeit auf die Festigkeit des Hakens abgestimmten Kettenstranges aufzunehmen. Die Kombination eines festigkeitsmäßig überdimensionierten Hakens mit dem Endglied einer Kette zu kleiner Festigkeit wird dabei durch eine Abstimmung der Dicke des den Einführspalt überbrückenden Querbolzens auf die innere Breite des Endgliedes des jeweiligen Kettenstranges sichergestellt, wobei Toleranzen der zu kombinierenden Bauteile durch geeignete Stufensprünge hinsichtlich der Nenndicke der Ketten verwechslungsfreier Systeme Rechnung getragen wird. Für Fälle, bei denen auf kleine Stufensprünge der Systemkomponenten Wert gelegt wird, ist es aus der DE-C-3 045 209 bekannt, den ebenfalls im Wesentlichen U-förmigen Einführspalt eines Gabetkopfes stufenförmig derart auszubilden, dass seine Weite zum Boden des Einführspaltes hin abnimmt.

Bekannt ist außerdem aus der GB-A-522 185, welche dem nächstliegenden Stand der Technik entspricht, ein aus im Wesentlichen zwei über Wälzkörper miteinander verbundenen Teilen bestehender Haken, bei dem die Zinken eines auch hier zum Anschluss eines Kettengliedes nutzbaren Gabelkopfes einen Einführspalt begrenzen, dessen unteres Ende in eine dreieckige Aufweitung übergeht. Der Übergang in die Aufweitung erfolgt dabei an Stellen, die einen Abstand von der Unterkante eines in diesem Falle ovalen Querbolzens einnehmen. Ein Einsatz dieses Hakens in Verbindung mit Speziaigliedern, die an die Weite des Einführspaltes angepassten Abflachung aufweisen, verbietet sich im Hinblick auf die Gefahr von Klemmerscheinungen und ungünstigen Belastungen der Gabelzinken.

### Darstellung der Erfindung

Die bekannten Haken vermögen insofern nicht voll zu befriedigen, als sie lediglich für den Anschluss an das Endglied eines Kettenstranges geeignet sind. Der Erfindung liegt die Aufgabe zugrunde, einen Haken zu schaffen, an den nicht nur das Endglied eines kräftemäßig an den Haken angepassten Kettenstranges, sondern auch andere Bauteile von Anschlagsystemen anschließbar sind, die ihr Einführen in den Einführspalt des Hakens erlaubende, abgeflachte Zonen aufweisen. Diese Aufgabe wird erfindungsgemäß dadurch gelöst, dass die sich an den Einführspalt des Gabelkopfes anschließenden Abschnitte der Gabelzinken des Hakens zusammen mit dem Querbolzen eine nach Art einer ringförmigen Öse ausgebildete Aufnahme formen, deren lichte Weite größer als die Weite des Einführspaltes ist.

Der erfindungsgemäße Haken bietet den Vorteil, dass in seinen Gabelkopf neben Endgliedern von hochfesten Rundstahlketten u. a. Aufhängeglieder, Verbindungsglieder, Ösenhaken sowie mit einer Anschlussöse versehene Verkürzungsorgane einhängbar sind, die in bekannter Weise Abflachungen aufweisen, die ihren Anschluss an Verbindungsglieder ermöglichen, die -wie aus der US-A-4 134 256 bekannt - nach Art von omegaförmigen Schäkeln ausgebildet sind, deren Einführspalt in ähnlicher Weise auf die Abmessungen von Kettengliedern abgestimmt ist wie der Einführspalt bekannter Gabelkopfhaken. Ein in eine Öse eines an einer Last befestigten Anschlagpunktes einhängbarer erfindungsgemäßer Haken kann also anders als bekannte Gabelkopfhaken ohne Zwischenschaltung eines kurzen Kettenstrangabschnittes und eines Verbindungsgliedes direkt mit einem Aufhängegliäd für einen Kranhaken verbunden werden, dessen Abmessungen bekanntlich regelmäßig erheblich größer sind als Bestandteile eines Anschlagsystems bildende Haken der erfindungsgemäßen Art. Wird als Anschlagpunkt eine Ringschraube mit einer Abflachung verwendet, so ist auch ein direkter Anschluss des Hakens an die Ringschraube und das Einhängen des Hakens in ein als Endglied eines Gehänges ausgebildetes Aufhängeglied möglich.

Weitere Merkmale und Einzelheiten der Erfindung ergeben sich aus den Unteransprüchen und der nachstehenden Beschreibung zweier in der beigefügten Zeichnung dargestellter, besonders Vorteilhafter Ausführungsformen der Erfindung.

### Kurze Beschreibung der Zeichnungen

Es zeigen:
- Figur 1: die Rückenansicht eines Hakens, der direkt mit einem in der Seitenansicht dargestellten Aufhängeglied verbunden ist, in das ein Kranhaken einhängbar ist,
- Figur 2: die Seitenansicht des mit dem im Schnitt dargestellten Aufhängeglied gemäß Figur 1 verbundenen Hakens gemäß Figur 1,
- Figur 3: die Seitenansicht eines mit einem teilweise im Schnitt dargestellten Ösenhaken verbundenen erfindungsgemäßen Hakens.

### Wege zur Ausführung der Erfindung

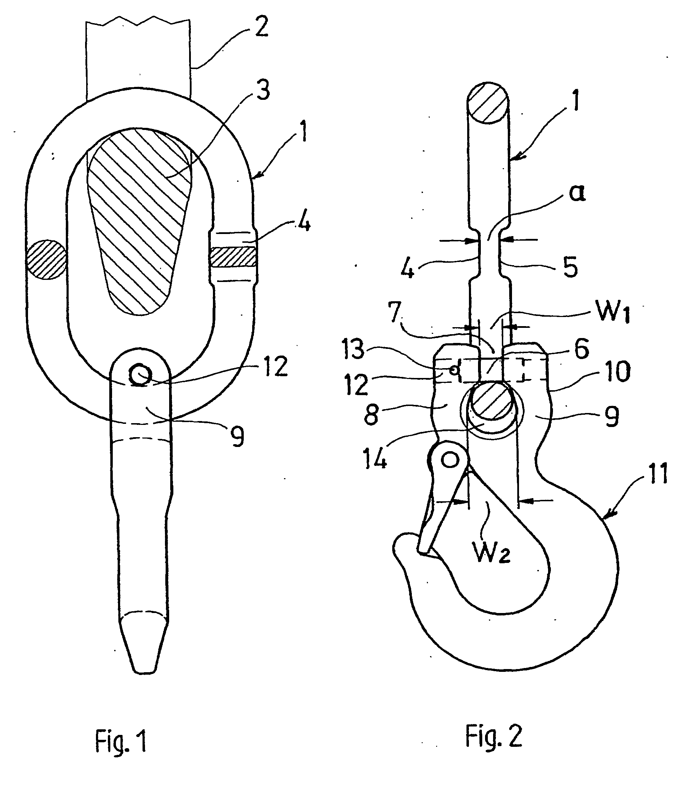

In Figur 1 und 2 ist 1 ein Aufhängeglied, dessen Teilung und innere Breite hinreichend groß sind, um es in die in Figur 1 lediglich angedeutete Zinke 2 eines Kranhakens einhängen zu können, dessen Querschnitt 3 den lichten Innenraum des Aufhängegliedes 1 weitgehend ausfüllt. Das Aufhängeglied 1 ist in bekannter Weise mit zwei Abflachungen 4, 5 versehen, deren Abstand a voneinander kleiner ist als die Weite W₁ des durch einen Querbolzen 6 überbrückten Einführspaltes 7 eines zwei Zinken 8 und 9 aufweisenden Gabelkopfes 10 eines im Sinne der Erfindung ausgebildeten Hakens 11. Im dargestellten Fall bilden der Haken 11 und das Aufhängeglied 1 eine Einheit, die genutzt werden kann, um einen eine Öse aufweisenden, an einer Last befestigten Anschlagpunkt mit einem Kranhaken zu verbinden. Zur Sicherung des Zusammenhaltes von Aufhängeglied 1 und Haken 11 dienen eine die Unverlierbarkeit des Querbolzens 6 sichernde Stufenbohrung 12 und ein Spannstift 13. Aufgrund der Weite W₂ der vom Querbolzen 6 und den Hakenzinken 8 und 9 gebildeten Aufnahme 14 und der inneren Breite des Aufhängegliedes 1 kann sich dieses ungehindert sowohl senkrecht als auch parallel zur Zeichnungsebene in der Aufnahme 14 bewegen.

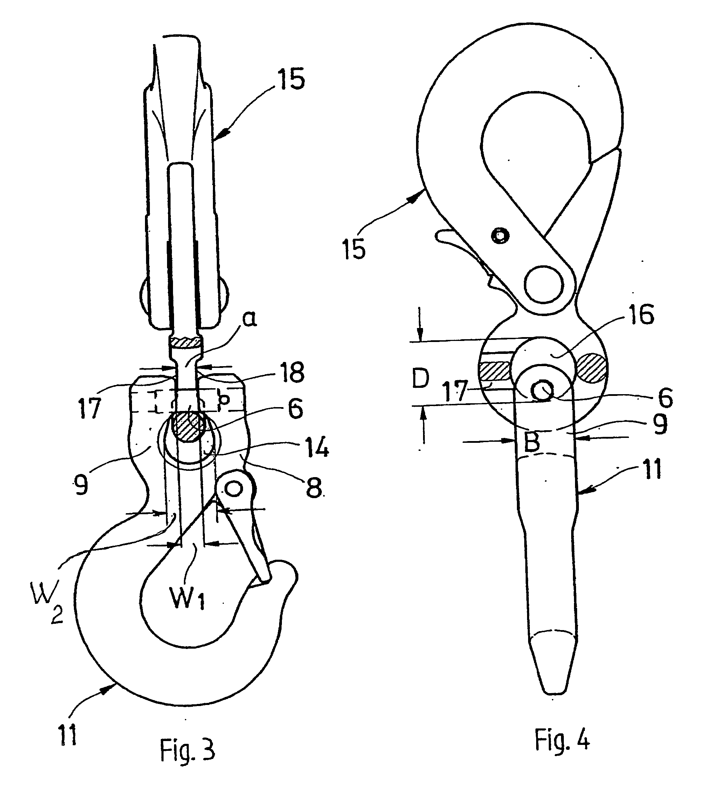

In den Figuren 3 und 4 ist eine aus einem erfindungsgemäßen Haken 11 gemäß Figur 1 und einem Ösenhaken 15 gebildete Einheit dargestellt, die beispielsweise genutzt werden kann, um das Endglied einer einsträngigen Ringkette gemäß DIN 5688 Teil 3 mit einem eine Öse aufweisenden Anschlagpunkt zu verbinden. Wie im zuvor beschriebenen Fall das Aufhängeglied weist in diesem Fall der Ösenhaken 15 im Bereich seiner Öse 16 zwei Abflachungen 17, 18 auf, deren Abstand a voneinander kleiner als die Weite W₁ des Einführspaltes des Hakens 11 ist. Aufgrund der Tatsache, dass der Durchmesser D der Aufnahme 16 größer als die Breite B der Gabelzinken 8, 9 ist, sind wiederum sowohl in der Zeichnungsebene als auch senkrecht zur Zeichnungsebene Bewegungen zwischen dem Haken 11 und dem Ösenhaken 15 möglich.

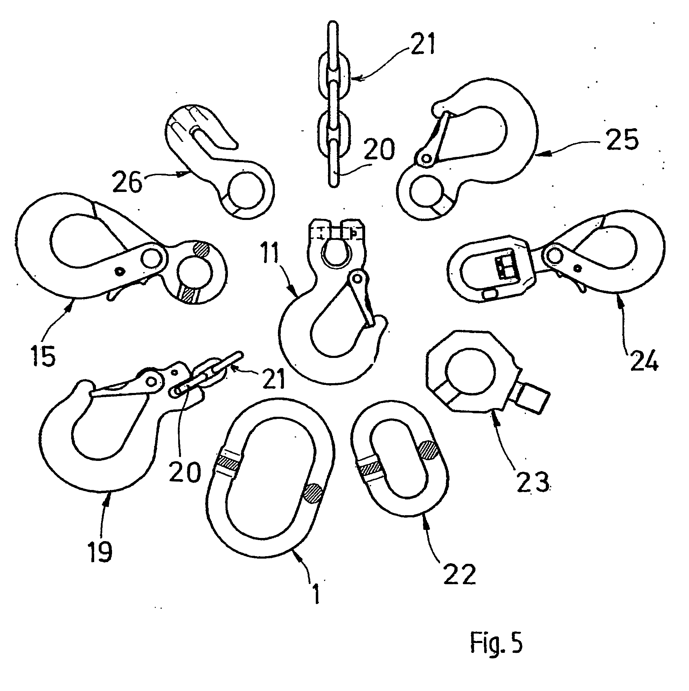

Figur 5 dokumentiert die Vielfalt der Einsatzmöglichkeiten des Hakens 11 und den Umstand, dass er sich anders als der in dieser Figur ebenfalls abgebildete übliche Gabelkopfhaken 19 nicht nur mit dem Endglied 20 eines mehr oder weniger langen Kettenstrangabschnittes 21, sondern auch - wie bereits ausgeführt - mit einem Aufhängeglied 1, einem Ösenhaken 15 und darüber hinaus mit einem Verbindungsglied 22, einem Anschlagpunkt 23, einem Wirbelhaken 24, einem modifizierten Ösenhaken 25 und mit einem Verkürzungselement 26 verbunden werden kann. Es versteht sich, dass auch die Teile 22 bis 26 im Kupplungsbereich Abflachungen aufweisen müssen, die ihr Einführen in den Einführspalt des Gabelkopfes des Hakens 11 ermöglichen.

Die Weite W₁ des Einführspaltes 7 ist in allen Fällen gleich der 1,05- bis 1,3-fachen Dicke der Glieder einer hochfesten Rundstahlkette 21, die zum Einsatz in Verbindung mit dem Haken 11 vorgesehen ist. Die Dicke des Querbolzens 6 ist an die innere Breite des jeweils anzuschließenden Kettengliedes angepasst.

## Patentansprüche

1. Haken (11) mit einem zum Anschluss einer hochfesten Rundstahlkette geeigneten Gabelkopf (10), dessen Gabelzinken (8, 9) einen Einführspalt (7) begrenzen, dessen Weite gleich der 1,05 bis 1,3 fachen Dicke der Glieder der Rundstahlkette beträgt, der durch einen zur Lastübertragung dienenden , an die innere Breite des jeweils anzuschließenden Kettengliedes angepassten, Querbolzen (6) überbrückt wird, **dadurch gekennzeichnet, dass** die sich an den Einführspalt (7) des Gabelkopfes (10) anschließenden Abschnitte der Gabelzinken (8, 9) des Hakens (11) zusammen mit dem Querbolzen (6) eine nach Art einer ringförmigen Öse ausgebildete Aufnahme (14) formen, deren lichte Weite (W₂) größer als die Weite (W₁) des Einführspaltes ist.

2. Haken nach Anspruch 1, **dadurch gekennzeichnet, dass** die lichte Weite (W₂) der Aufnahme (14) mindestens gleich der zweifachen Weite (W₁) des Einführspaltes (7) ist.

3. Haken nach Anspruch 1 oder 2, **dadurch gekennzeichnet, dass** die Breite (B) der Gabelzinken (8, 9) im Bereich der Aufnahme (14) gleich der 2,5- bis 3,5-fachen Weite (W₁) des Einführspaltes (7) ist.

4. Haken nach einem der Ansprüche 1 bis 3, **dadurch gekennzeichnet, dass** die Ränder der im Bereich der Aufnahme (14) einander zugewandten Seiten der Gabelzinken (8, 9) abgerundet sind.

## Claims

1. Hook (11) with a fork head (10) which is suitable for connecting a high-strength round steel chain and of which the fork tines (8, 9) bound an introduction gap (7), of which the width is equal to 1.05 to 1.3 times the thickness of the links of the round steel chain and which is spanned by a cross-bolt which serves for transferring loads and is adapted to the inner width of the chain link which is to be connected in each case, **characterized in that** those portions of the fork tines (8, 9) of the hook (11) which adjoin the introduction gap (7) of the fork head (10), together with the cross-bolt (6), form a receptacle (14) which is designed in the manner of an annular eye and of which the inside width (W₂) is greater than the width (W₁) of the introduction gap.

2. Hook according to Claim 1, **characterized in that** the inside width (W₂) of the receptacle (14) is at least equal to twice the width (W₁) of the introduction gap (7).

3. Hook according to Claim 1 or 2, **characterized in that** the width (B) of the fork tines (8, 9) in the region of the receptacle (14) is equal to 2.5 to 3.5 times the width (W₁) of the introduction gap (7).

4. Hook according to one of Claims 1 to 3, **characterized in that** the peripheries of both sides of the fork tines (8, 9) which are directed towards one another in the region of the receptacle (14) are rounded.

## Revendications

1. Crochet (11) comportant une tête formant fourche (10), qui convient pour le raccordement d'une chaîne en acier rond très résistante et dont les dents (8, 9) délimitent une fente d'entrée (7) dont la largeur est comprise entre 1,05 et 1,3 fois l'épaisseur des maillons de la chaîne en acier rond, et qui est traversée par un boulon transversal (6) qui est utilisé pour transmettre une charge et est adapté à la largeur intérieure du maillon de chaîne devant être respectivement raccordé, **caractérisé en ce que** les tronçons des dents (8, 9) de la fourche du crochet (11), qui se raccordent à la fente d'entrée (7) de la tête formant fourche (10), forment conjointement avec le boulon transversal (6) un logement (14) qui est agencé à la manière d'un oeillet de forme annulaire et dont la largeur intérieure (W₂) est supérieure à la largeur (W₁) de la fente d'entrée.

2. Crochet selon la revendication 1, **caractérisé en ce que** la largeur intérieure (W₂) du logement (14) est au moins égale au double de la largeur (W₁) de la fente d'entrée (7).

3. Crochet selon la revendication 1 ou 2, **caractérisé en ce que** la largeur (B) des dents (8, 9) de la fourche s'étend, dans la zone du logement (14), sur 2,5 à 3,5 fois la largeur (W₁) de la fente d'entrée (7).

4. Crochet selon l'une des revendications 1 à 3, **caractérisé en ce que** les bords des côtés des dents (8, 9) de la fourche, qui se font face dans la zone du logement (14), sont arrondis.
